# EUROPEAN PATENT APPLICATION

(11) **EP 1 388 919 A2**
(43) Date of publication of application: **11.02.2004**
(21) Application number: 03254859.6
(22) Date of filing: 04.08.2003
(51) Int. Cl.: H02G 11/00, B41J 19/20

(54) **Support device for a ribbon cable**

(30) Priority: 08.08.2002 US 214696
(71) Applicant: Ortho Clinical Diagnostics Inc., Rochester, New York 14626-5101 (US)
(72) Inventor: Shaw, James D., Rochester, NY 14620 (US)
(74) Representative: Fisher, Adrian John

(57) **Abstract**

A support for a movable ribbon cable has a length and a first end and a second end. The support includes a member having a length and a first end and a second end thereof. The first end of the member is fixed at the movable device and the second end of the member is fixed at a point. The length of the member is substantially parallel with the length of the ribbon cable and the length of the member is movable in a substantially parallel manner with the length of the ribbon cable.

## Description

### FIELD OF THE INVENTION

The present invention relates, in general, to ribbon cables, and more particularly, to a new and useful device for supporting a ribbon cable.

### BACKGROUND OF THE INVENTION

There are numerous applications which require a device to move in a reciprocating, linear fashion and further, require the device be connected by electrical wires to a non-moving point. A common example of such a device is a print head on a printer. Other common examples of such devices include electronic assemblies such as subsystems of clinical analyzers and high-throughput screening (HTS) medical systems. If the device requires a high number of movement cycles in its expected life, a ribbon cable is typically used in place of wires. A ribbon cable is a flat array of thin conductive strips laminated between two layers of insulating material. Because the ribbon cable is thin compared to a wire, it can withstand a far larger number of bending cycles than a wire. Selecting the proper material and thickness ribbon cable and appropriate flex radius can ensure product life into the millions of cycles.

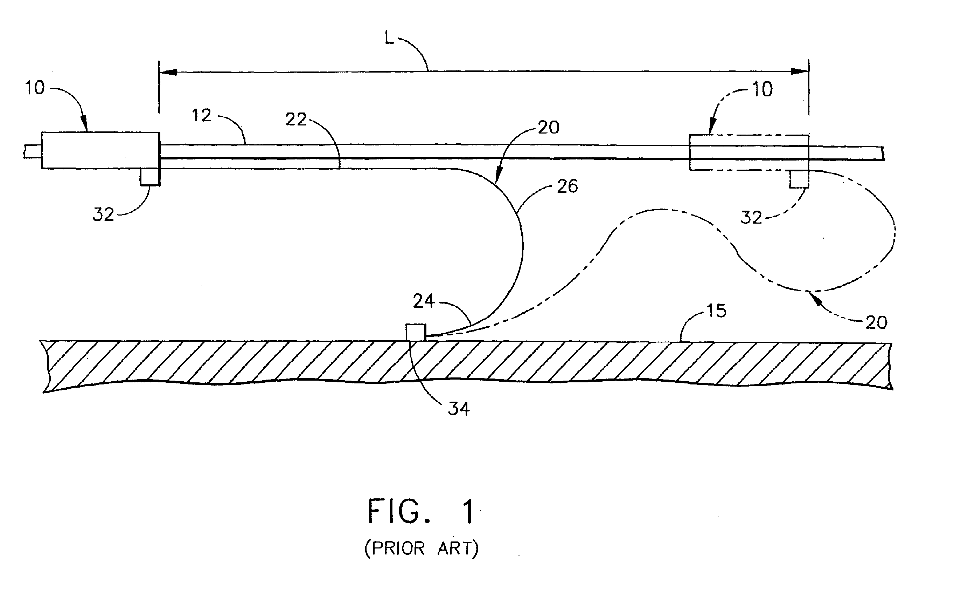

Accordingly, in movable electronic assemblies such as those mentioned above, and schematically illustrated in Fig. 1, those applications utilizing electronic assemblies in the form of a movable device, generally designated 10, which moves along a track 12 and which utilizes a ribbon cable 20 in which the ribbon cable 20 is typically oriented in a horizontal plane. The ribbon cable 20 is generally U-shaped having a first leg 22 and a second leg 24 with a heel portion 26 therebetween. In general, the heel 26 is generally arcuate in configuration thereby resulting in the ribbon cable 20 having a U-shaped configuration. For movable devices 10 that require movement along any of the three axes of movement (X, Y or Z coordinate axes or planes), for instance, within a horizontal plane or on a horizontal level, the ribbon cable 20 is likewise oriented in the horizontal plane thereby forming a horizontal U-shape.

The ribbon cable 20 is generally operatively connected to or fixed to the movable device 10 by a first attachment mechanism 32 which operatively connects the first leg 22 of the ribbon cable 20 with the electronic components of the movable device 10. A second attachment mechanism 34 is located at an opposite end of the ribbon cable 20, for instance, at the end of the second leg 24 of the ribbon cable 20. And, the attachment mechanism 34 is a fixed or stationary point which fixes or secures the end of the second leg 24 of the ribbon cable 20, e.g. the end opposite the movable device 10, to a surface 15. Attachment mechanism 34 thereby secures the second end of the ribbon cable 20 to the surface 15 and prevents movement thereof. The surface 15 is any suitable surface capable of securing or fixing the ribbon cable 20 to include surfaces such as a frame, rail, guide, beam, or the like or any other suitable surface capable of fixedly attaching one end of the ribbon cable 20 with the attachment mechanism 34. Thus, the attachment mechanism 34 thereby secures the one end of the ribbon cable 20 to the surface 15 thereby defining a stationary portion or stationary point of the ribbon cable 20. Accordingly, the ribbon cable 20 is oriented in either the X, Y or Z coordinate plane in alignment with and dependent on the plane of movement of the movable device 10.

As further illustrated in Fig. 1, the movable device 10 is capable of movement about the stationary point according to length L. The length L is a traversing length for the movable device 10 and is sized in a manner that is dependent on the length of the ribbon cable 20 itself.

Ideally, it is the intent for the ribbon cable 20 to maintain a substantial U-shaped configuration throughout the entire length L of movement of the movable device 10. Again, it is always desired that both the first leg 22 and the second leg 24 of the ribbon cable 20 along with the heel portion 26 maintain a substanially U-shape configuration wherein the legs 22 and 24 will alternately increase and decrease in length with respect to each other, but ideally remain substantially parallel with each other.

Although this is the desired function of the ribbon cable 20, in reality, the prior art ribbon cables 20 have limitations. For example, if the length L, e.g. the required distance to be traveled by the moving device 10, is too long, then, the ribbon cable 20 (usually based on the thin or small width of the ribbon cable 20) is not capable of supporting its own weight. This is a very common problem with the known ribbon cables 20 such that the moving legs 22 and 24 can buckle or sag thereby permitting the legs 22 and 24 to contact and provide friction with the opposite legs 24 and 22 respectively during movement of the movable device 10. This friction force results in wear and tear of the material of the ribbon cable 20 such as the insulating layer (not shown) which ultimately will lead to failure of both the ribbon cable 20 and possibly the movable device 10 itself.

Due to the sagging and friction problem mentioned above, there have been several attempts to address these deficiencies. One known corrective action that was taken included increasing the thickness of the ribbon cable 20 in order to reduce the wear and tear effect. However, the increase in thickness of the ribbon cable 20 ultimately leads to an increase in stiffness which results in an increase in bending stress thereby reducing the useful life cycle of the ribbon cable 20.

Another potential solution to these deficiencies has been to utilize cable supports composed of interlocking plastic link chains which enable the ribbon cable 20 to be used over longer distances of movement L. However, these multiple components, e.g. plastic chain links, may not be ultimately suitable for high-speed longer-life applications especially where quiet operation of the overall system utilizing the movable device 10 is required. This would be especially true for systems that include a movable device 10 that is either a print cartridge assembly for a high-speed printer, or a sub-assembly for a high throughput screening system such as a clinical analyzer.

Additionally, another drawback to the interlocking plastic chain link approach is directed toward electrostatic discharge (ESD). Thus, if the movable device 10 requires adequate grounding through the ribbon cable 20 or other flexible wire cable, it is extremely difficult to effectively and safely dissipate the ESD with this type of cable support in place. It is known that the grounding layers provided by ribbon cables 20, in general, usually do not provide a low enough resistance required for effective ESD dissipation.

Therefore, up till now, there is no known system, apparatus or method for addressing these drawbacks normally associated with ribbon cables that are used with movable devices.

### SUMMARY OF THE INVENTION

The present invention relates to a support for a ribbon cable that is operatively connected to a movable device such as those mentioned previously. Accordingly, the present invention is a support for a movable device having a ribbon cable wherein the ribbon cable has a length and a first end a second end. The support comprises a member having a length and a first end and a second end thereof. The first end of the member is fixed at the movable device and the second end of the member is fixed at a point. The point is a fixed or stationary point on a surface.

Additionally, the length of the member is substantially parallel with the length of the ribbon cable and the length of the member is movable in a substantially parallel manner with the length of the ribbon cable. The support member has a configuration that is adaptable to the configuration of the ribbon cable and is in substantial alignment therewith. Accordingly, for those ribbon cables having a substantially U-shaped configuration, the support member has a substantially U-shape configuration as well.

For those ribbon cables having one end operatively connected to the movable device and an opposite end thereof operatively connected to the fixed or stationary point, the support member has one end connected at the movable device through a first attachment mechanism and a second end attached or fixed at the stationary point by a second attachment mechanism. Accordingly, the one end of the support member that is attached at the movable device is movable along with the one end of the ribbon cable that is operatively connected directly to the movable device.

Since the support member is aligned substantially parallel with the ribbon cable and movable therewith, the support member is positionable adjacent and/or in contact with either the interior surface or the exterior surface of the ribbon cable. Additionally, in order to facilitate replacement, the first end and the second end of the support member are detachably connected or detachably fixed or removeably secured to the movable device and the stationary point at the first attachment mechanism and the second attachment mechanism respectively.

The support member also includes a first leg and a second leg and a heel portion therebetween thereby defining a U-shaped configuration. Moreover, the support member further includes an apex or crown longitudinally arranged and centered about the entire length or longitudinal axis of the support member. Accordingly, the support member itself also has a substantially U-shaped configuration in cross-section. Thus, the support member defines a uniform radius at the crown or apex extending from either side of the crown or apex across the entire surface area of the length of the support member.

Accordingly, when positioned adjacent the ribbon cable, the support member results in the crown or apex being adjacent and closest to either the interior surface or the exterior surface of the ribbon cable depending on the specific positioning between the support member and the ribbon cable. Alternatively, the crown of the support member contacts either the interior or exterior surface of the ribbon cable.

In order to address some of the deficiencies addressed above, the support member in accordance with the present invention is used as a ground for dissipating electrostatic discharges (ESD). Accordingly, the support member is made of a conductive material such as a steel alloy. Moreover, since the support member is required to undergo many cycles of movement, the support member is preferably made of a resilient or spring-tempered material.

Accordingly, the support member for a ribbon-cable of a movable device prevents in accordance with the present invention prevents sagging and friction rubbing of the legs of the ribbon-cable. The support member in accordance with the present invention also provides a high conductivity ground for effective ESD dissipation. Additionally, based on selection of the thickness and properties of the material used for the support member in accordance with the present invention as well as the dimensions of the legs, heel, crown and flex radius, the support member for the ribbon cable delivers the same design life or has the identical life cycle to the ribbon cable itself. Additionally, due to the unique design of the present invention, i.e. no moving parts, the support member in accordance with the present invention is extremely resistant to wear and tear and remains relatively silent during operations such as high-speed movement of the movable device and ribbon cable.

Moreover, since the support member is aligned substantially parallel with either the interior surface or the exterior surface of the ribbon cable, there are no requirements for additional space in order to accommodate the additional component of the support member itself. And, due to its compactness and design, the support member in accordance with the present invention adds only a slight amount of additional mass and minor additional friction to the movable device and attached ribbon cable.

### BRIEF DESCRIPTION OF THE DRAWINGS

Fig. 1 is a side elevational view of a schematic illustration of a known movable device and ribbon cable;
Fig. 2 is a perspective view of a support member for a ribbon cable of a movable device in accordance with the present invention;
Fig. 3 is a side elevational view of a schematic illustration of a movable device with ribbon cable and the support member of Fig. 2 in accordance with the present invention;
Fig. 4 is a view of Fig. 3 taken along line 4-4;
Fig. 5 is a side elevational view of a schematic illustration of a movable device with ribbon cable and the support member of Fig. 2 in an alternative arrangement in accordance with the present invention;
Fig. 6 is a view of Fig. 5 taken along line 6-6.

### DETAILED DESCRIPTION OF PREFERRED EMBODIMENTS

The present invention is a support apparatus or device for a movable device including a ribbon cable. The support device or support member in accordance with the present invention is useful for various types of movable devices requiring a ribbon cable or bound strips or bundles of wires. The support member in accordance with the present invention is particularly useful for those movable device and ribbon cable combinations which are system assemblies or subsystem assemblies comprised of electrical components or electronics useful for functions such as printing, metering, dispensing or the like generally performed by various types of movable devices such as printers or high-throughput screening systems to include micro-array analysis systems (containing DNA, RNA or Peptide sequences) and medical systems such as clinical analyzers.

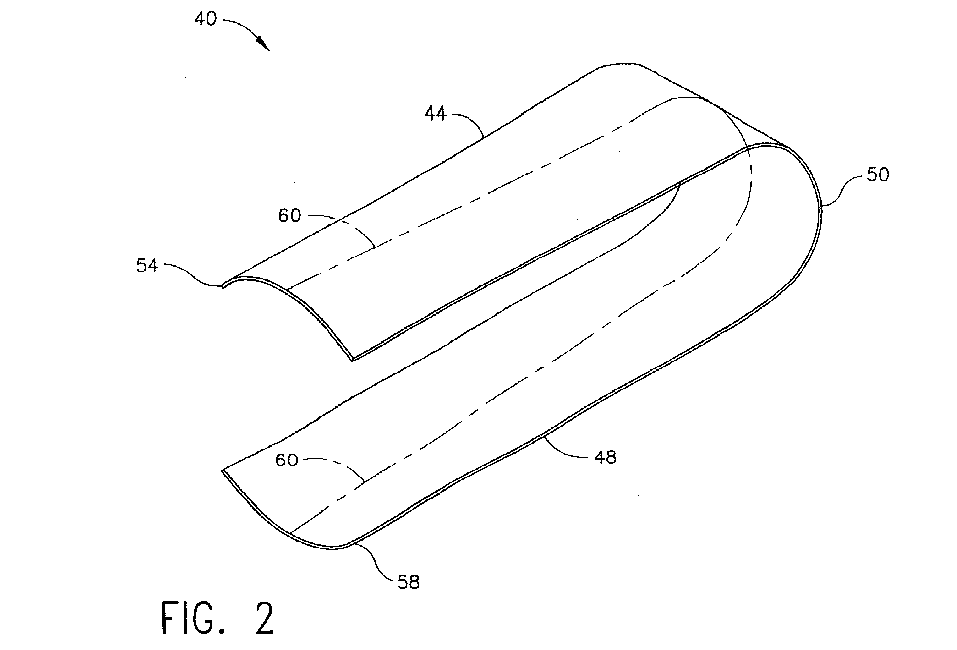

A support device in accordance with the present invention is utilized with the movable device 10 and ribbon cable 20 combination previously mentioned in Fig. 1. The present invention is a support device comprising a member 40 having a unitary or one-piece configuration consisting of a first leg 44 and a second leg 48. A heel portion 50 is integrally formed with the first leg 44 and the second leg 48. Overall, the support member 40 has a shape adaptable to the shape of the ribbon cable 20. For example, the support member 40 in accordance with the present invention has a U-shaped configuration wherein the first leg 44 terminates in a first end 54 and the second leg 48 terminates in a second end 58 as best shown in Fig. 2. Alternatively, the first leg 44, second leg 48 and heel 50 can be individual components connected to each other in order to achieve a uniform surface area along the length of the support member 40.

An apex or crown 60 is centered and longitudinally arranged along the entire length of the support member 40 beginning at the first end 54 and ending at the second end 58 of the first leg 44 and second leg 48 respectively as well as the heel portion 50. The crown 60 defines a uniform radius extending from both sides of the crown 60. Accordingly, due to the crown 60 and the uniform radius formed thereby, the support member 40 also has a substantially U-shape in cross-section. And, the apex or crown 60 provides the support member 40 with rigidity.

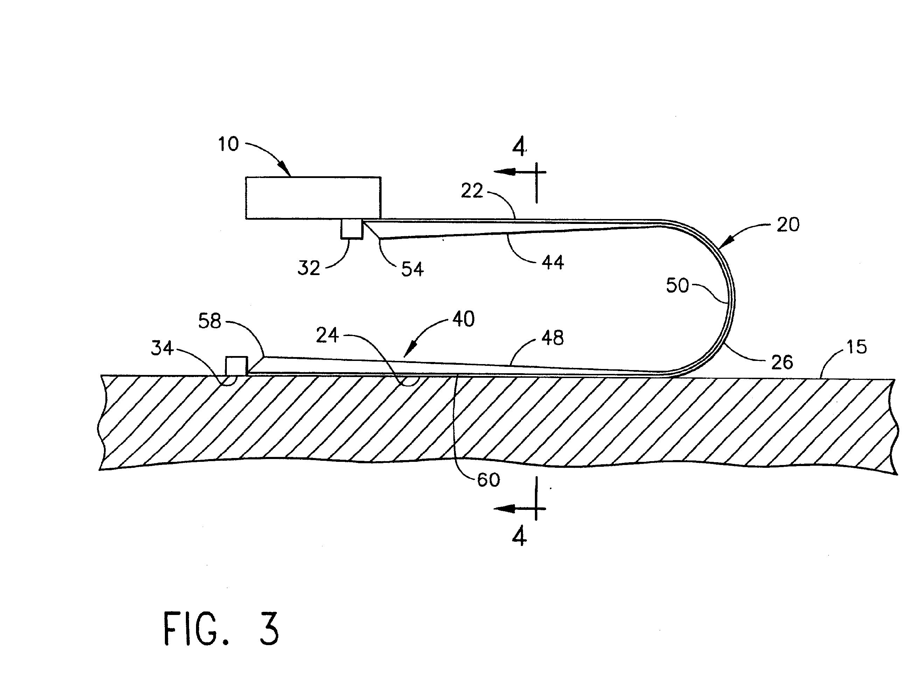

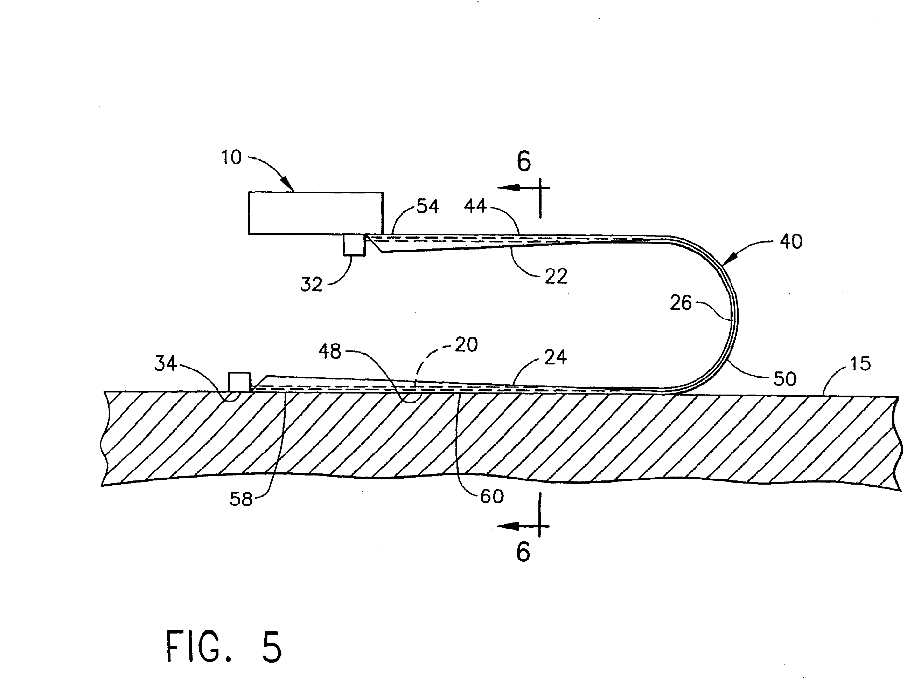

The support member 40 is made of a resilient or spring-tempered material that is also a highly conductive material such as a steel alloy. Due to these material properties, the support member is used as a ground for dissipating electrostatic discharges (ESD). Additionally, due to the resilient or spring-biased properties of the support member 40, in addition to its unitary configuration, the support member 40 has a configuration that is readily adaptable and conforms to the general shape of the ribbon cable 20 when attached to the movable device 10 as shown in Figs. 3 and 5.

Accordingly, as shown in Figs. 3 and 5, the first end 54 of the support member 40 is connected to the movable device 10 by the attachment mechanism 32 and the second end 58 of the support member 40 is attached to the fixed or stationary point at the second attachment mechanism 34 at the surface 15.

In order to facilitate replacement of the support member 40 from the first attachment mechanism 32 and the second attachment mechanism 34 for replacement purposes or the like, both the first end 54 and the second end 58 of the support member 40 are detachably connected or detachably fixed to the first attachment mechanism 32 and the second attachment mechanism 34 respectively.

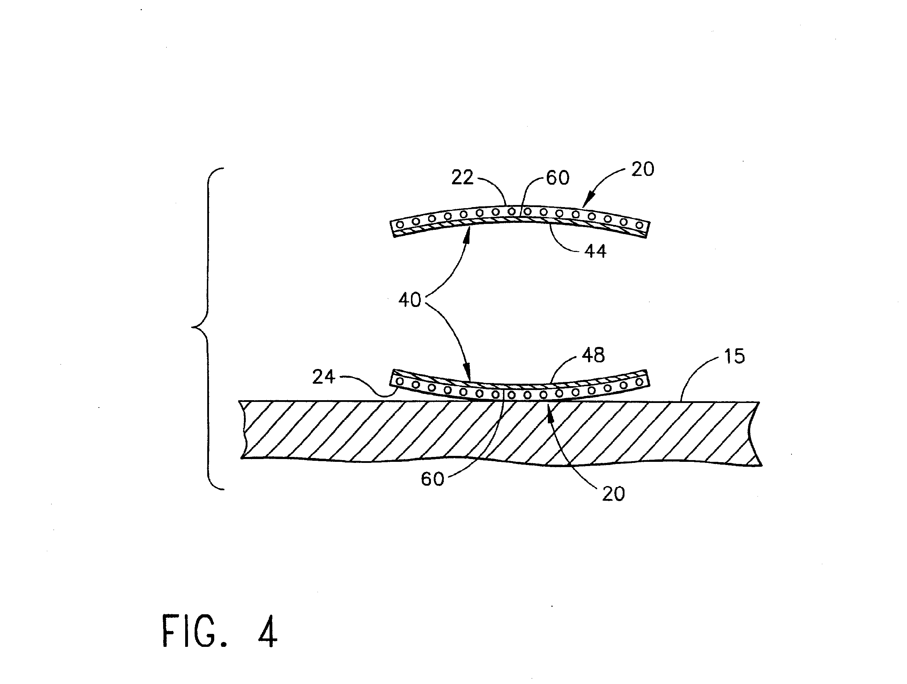

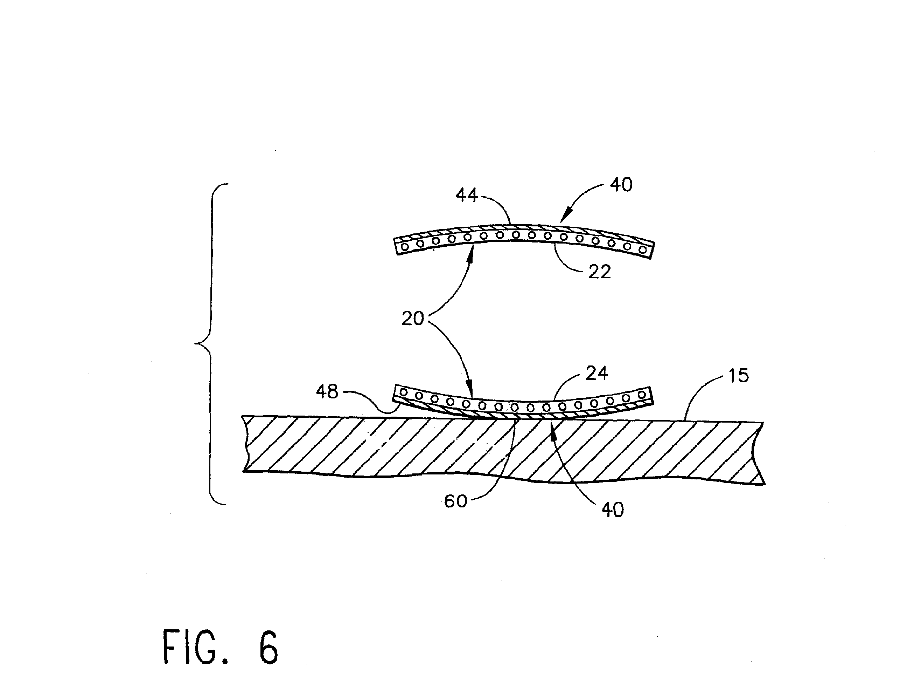

As shown in Figs. 3 and 5, the support member 40 can be arranged at an interior surface of the ribbon cable 20 as shown in Fig. 3 wherein the crown 60 (Fig. 2) of the support member 40 is arranged adjacent to and nearest to or in direct contact with the interior surface of the ribbon cable 20 as shown in Figs. 3 and 4. Moreover or alternatively, the crown 60 (Fig. 2) of the support member 40 is arranged adjacent to and nearest to or in direct contact with the exterior surface of the ribbon cable 20 as shown in Figs. 5 and 6. Accordingly, as shown in Figs. 3 and 5, the first leg 44, the heel portion 50, and the second leg 48, of the support member 40 is aligned directly with and substantially parallel to or with the first leg 22, the heel portion 26 and the second leg 24 of the ribbon cable 20. The support member 40 is directly movable with the ribbon cable 20 and movable device 10. And, the support member 40 has the first leg 44 supporting the first leg 22 of the ribbon cable 20 and the second leg 48 supporting the second leg 24 of the ribbon cable 20 as well as the heel portion 50 supports the heel portion 26 of the ribbon cable 20. The support provided by the support member 40 for the ribbon cable 20 is based on parallel, movable support in a corresponding manner with the ribbon cable 20. Accordingly, the support member 40 correspondingly moves in the same plane as the ribbon cable 20, e.g. the X, Y or Z coordinate planes (same plane as the movable device 10). Thus, the movable device 10, the ribbon cable 20 and the support member 40 are movable in any desired plane within 3-dimensions (X, Y or Z coordinate plane).

Due to the material properties of the support member 40, the support member 40 is movable with and in close proximity to (or movable contact with), in a substantially parallel manner, with the length of the ribbon cable 20. Thus, movement of the ribbon cable 20 is supported by the support member 40 thereby preventing sagging and friction rubbing by the legs 22 and 24 of the ribbon cable 20. Accordingly, the ribbon cable 20 results in a more prolonged life cycle due to less wear and tear enabled by the support member 40.

Not only does the support member 40 prevent the ribbon cable 20 from sagging, it also provides a high conductivity ground for effective ESD dissipation. Based on the specific material thickness, crown dimensions and flex radius, as well as the material properties of the support member 40, the support member 40 has a similar design life or life cycle as the ribbon cable 20. Due to the unitary construction of the support member 40, i.e. there are no moving parts, wear and tear is significantly reduced as well as a significant reduction in noise that would normally occur during high-speed movement as found with the prior art support devices. Additionally, due to the compact configuration of the support member 40, no additional space is required since the support member 40 is aligned directly with and contacts the ribbon cable 20. Also, the support member 40 adds only a minor amount of mass and friction to the movable device 10 and its connected ribbon cable 20.

While preferred embodiments of the present invention have been shown and described herein, it will be obvious to those skilled in the art that such embodiments are provided by way of example only. Numerous variations, changes, and substitutions will now occur to those skilled in the art without departing from the invention. Accordingly, it is intended that the invention be limited only by the spirit and scope of the appended claims.

## Claims

1. A support for a movable device having a ribbon cable, the ribbon cable having a length and a first end and a second end, the support comprising:
a member having a length and a first end and a second end thereof, the first end of the member being fixed at the movable device and the second end of the member being fixed at a point, the length of the member being substantially parallel with the length of the ribbon cable and the length of the member being movable in a substantially parallel manner with the length of the ribbon cable.

2. The support according to Claim 1, wherein one end of the member is movable with one end of the member with one end of the ribbon cable.

3. The support according to Claim 2, wherein the member is adjacent an interior surface of the ribbon cable.

4. The support according to Claim 2, wherein the member is adjacent an exterior surface of the ribbon cable.

5. The support according to Claim 2, wherein the first end and the second end of the member are detachably fixed to the movable device and the point.

6. The support according to Claim 2, further comprising a crown along the length of the member.

7. The support according to Claim 6, wherein the member is substantially U-shaped in cross-section.

8. The support according to Claim 7, wherein the member defines a uniform radius at the crown.

9. The support according to Claim 8, wherein the crown is adjacent a surface of the ribbon cable.

10. The support according to claim 9, wherein the member is adjacent an interior surface of the ribbon cable.

11. The support according to Claim 9, wherein the member is adjacent an exterior surface of the ribbon cable.

12. The support according to Claim 2, wherein the member is made of a conductive material.

13. The support according to Claim 12, wherein the member is used as a ground for dissipating electrostatic discharges.

14. The support according to Claim 2, wherein the member is made of spring-tempered material.

15. The support according to Claim 14, wherein the member is made of a steel alloy.

16. The support according to Claim 2, wherein the ribbon cable and the member are movable within the X coordinate plane.

17. The support according to Claim 2, wherein the ribbon cable and the member are movable within the Y coordinate plane.

18. The support member according to Claim 2, wherein the ribbon cable and the member are movable within the Z coordinate plane.
